# EUROPEAN PATENT APPLICATION

(11) **EP 4 567 946 A1**
(43) Date of publication of application: **11.06.2025**
(21) Application number: 23880036.1
(22) Date of filing: 15.09.2023
(51) Int. Cl.: H01M 10/04, H01M 10/058, H01M 50/30

(54) **SECONDARY BATTERY DEGASSING DEVICE**

(30) Priority: 17.10.2022 KR 20220133604
(71) Applicant: LG Energy Solution, Ltd., Seoul 07335 (KR)
(72) Inventor: CHOI, Hyoung Sik, Daejeon 34122 (KR); KIM, Ki Woong, Daejeon 34122 (KR); AHN, Se Young, Daejeon 34122 (KR); JEON, Joong Hyuk, Daejeon 34122 (KR)
(74) Representative: Plasseraud IP
(86) International application number: PCT/KR2023/013956
(87) International publication number: WO 2024/085457

(57) **Abstract**

The present invention relates to a secondary battery degassing apparatus, and more particularly, to a secondary battery degassing apparatus including: a first rolling press on which a plurality of first pressing rollers are mounted at a predetermined interval; a second rolling press which is disposed to face the first rolling press and on which a plurality of second pressing rollers are mounted at a predetermined interval; a first driving device configured to allow a distance between the first rolling press and the second rolling press to vary; and a second driving device driven to allow the first pressing roller and the second pressing roller to rotate, wherein the first pressing roller and the second pressing roller is in rolling contact with the secondary battery disposed between the first rolling press and the second rolling press to press the secondary battery.

## Description

### TECHNICAL FIELD

The present application claims the benefit of the priority of Korean Patent Application No. 10-2022-0133604, filed on October 17, 2022, which is hereby incorporated by reference in its entirety.

The present invention relates to a secondary battery degassing apparatus, and more specifically, to a secondary battery degassing apparatus which presses a secondary battery to push out a gas trapped in an electrode assembly.

### BACKGROUND ART

A method for manufacturing a battery call as a pouch-type secondary battery according to the related art is as follows. First, a positive electrode plate and a negative electrode plate are manufactured, and then, a separator is disposed between the positive electrode plate and the negative electrode plate, and the positive electrode plate, the separator, and the negative electrode plate are stacked to manufacture an electrode assembly. Thereafter, a plasticizer (DBP) is extracted from the electrode assembly manufactured as above, and an electrode tab is welded to an electrode lead of the electrode assembly and the electrode assembly is embedded inside a pouch case. After the electrode assembly is embedded in the pouch case, an electrolyte is injected into the pouch case to impregnate the electrode assembly with the electrolyte. When the electrolyte is injected as described above, an edge of the pouch case is bonded by thermal fusion to seal the pouch case.

Thereafter, in order to stabilize the battery cell assembled as described above, an aging process is performed, and then, the battery cell is repeatedly charged and discharged to perform an activation process. However, during the activation process, an irreversible reaction of the electrolyte and additives occurs due to formation of an SEI layer, and thus, a gas is generated. The gas inside the pouch case needs to be removed, and if the gas is not removed, it will cause battery cell failure. Therefore, a degassing process is performed using a battery cell degassing apparatus to remove the gas inside the pouch case. In the degassing process, the generated gas may be removed by forming a degas hole in the pouch and suctioning the gas from the battery cell in a vacuum chamber. The formed degas hole may be closed by taping, etc.

However, the gas generated around the electrode assembly inside the battery cell may be removed through the above-described degassing process, but it may be difficult to completely remove even a fine gas generated and trapped between a negative electrode, a positive electrode, and a separator of the electrode assembly, and the fine gas trapped between the negative electrode, the positive electrode, and the separator may cause lithium precipitation in the subsequent secondary activation process, which has a negative impact on performance and lifespan of the secondary battery.

As a result, it is necessary to develop a technology to solve the above problems.

### DISCLOSURE OF THE INVENTION

### TECHNICAL PROBLEM

The present invention is intended to solve the above problem, and an object of the present invention is to provide a secondary battery degassing apparatus which presses a secondary battery to push a fine gas trapped between a negative electrode, a positive electrode, and a separator of an electrode assembly accommodated in the secondary battery to the outside of the electrode assembly to reduce lithium precipitation caused by the gas trapped in the electrode assembly within the secondary battery.

### TECHNICAL SOLUTION

As one embodiment of the present invention, a secondary battery degassing apparatus includes: a first rolling press on which a plurality of first pressing rollers are mounted at a predetermined interval; a second rolling press which is disposed to face the first rolling press and on which a plurality of second pressing rollers are mounted at a predetermined interval; a first driving device configured to allow a distance between the first rolling press and the second rolling press to vary; and a second driving device driven to allow the first pressing roller and the second pressing roller to rotate, wherein the first pressing roller and the second pressing roller is in rolling contact with the secondary battery disposed between the first rolling press and the second rolling press to press the secondary battery.

In addition, the first pressing roller and the second pressing roller may be disposed at positions corresponding to each other.

In addition, the shortest distance between the first pressing roller and the second pressing roller may be equal to greater than a thickness of an electrode assembly provided in the secondary battery.

In addition, a plurality of first protection plates, each of which has a flat bottom surface, are disposed on a lower end of the first rolling press, each of the first protection plates may be disposed between the plurality of first pressing rollers, and each of the first pressing rollers further may protrudes downward than the first protection plate.

In addition, the second rolling press may further include: a driving gear coupled to the second driving device so as to be driven to rotate; and a first transmission gear disposed between the driving gear and the second pressing roller to transmit rotational driving of the driving gear to the second pressing roller.

In addition, teeth engaged with each other may be provided on the second pressing roller and the first transmission gear.

In addition, the first transmission gear may be disposed between the pair of second pressing rollers adjacent to each other.

In addition, the second rolling press may further include a plurality of second transmission gears that are sequentially disposed at a predetermined interval with respect to the first transmission gear and are respectively disposed between the pair of second pressing rollers that are adjacent to each other.

In addition, the secondary battery degassing apparatus may further include a transmission line configured to transmit rotational power of the first transmission gear to the first pressing roller.

In addition, the first transmission gear may include: a first gear part gear-coupled to the driving gear; and a first pulley part protruding in an axis direction from the gear part and in contact with the transmission line.

In addition, a first guide groove may be defined along a circumference of the first pulley part so that the transmission line is guided.

In addition, the secondary battery degassing apparatus may further include a tensioner that increases in tension of the transmission line when the first rolling press and the second rolling press are driven to be close to each other by the first driving device.

In addition, the tensioner may have one end that is hinge-coupled to the first rolling press and the other that is in contact with the transmission line, and when the first rolling press and the second rolling press are driven to be close to each other by the first driving device, the other end of the tensioner may be configured to press the transmission line outward.

In addition, the first rolling press may include a plurality of intermediate rollers, each of which is disposed between the plurality of first pressing rollers, and the transmission line may be in repeatedly contact with top surfaces of the plurality of first pressing rollers and bottom surfaces of the plurality of intermediate rollers so that the first pressing roller and the intermediate roller rotate.

In addition, the second roller press may include a third transmission gear that is disposed to be adjacent to the second transmission gear, which is farthest from the first transmission gear, and is in contact with the second pressing roller.

In addition, the transmission line may be configured to connect the third transmission gear to the first pressing roller.

In addition, the third transmission gear may include: a second gear part gear-coupled to the second transmission gear; and a second pulley part protruding in an axis direction from the second gear part and in contact with the transmission line.

In addition, a second guide groove may be defined along a circumference of the second pulley part so that the transmission line is guided.

In addition, the secondary battery degassing apparatus may further include a guide rail configured to guide vertical driving on both surfaces of at least one of the first rolling press and the second rolling press.

In addition, a plurality of second protection plates, each of which has flat one surface, may be disposed on one end of the second rolling press, each of the second protection plates may be disposed between the plurality of second pressing rollers, and each of the second pressing rollers may further protrude to one side than the second protection plate.

### ADVANTAGEOUS EFFECTS

According to the present invention, the gas generated and trapped between the negative electrode, the positive electrode, and the separator of the electrode assembly accommodated inside the secondary battery during the activation process may be pushed outward from the electrode assembly and then removed to reduce the lithium deposited inside the secondary battery, thereby realizing the stable performance and manufacture the secondary battery having the improved lifespan.

### BRIEF DESCRIPTION OF THE DRAWINGS

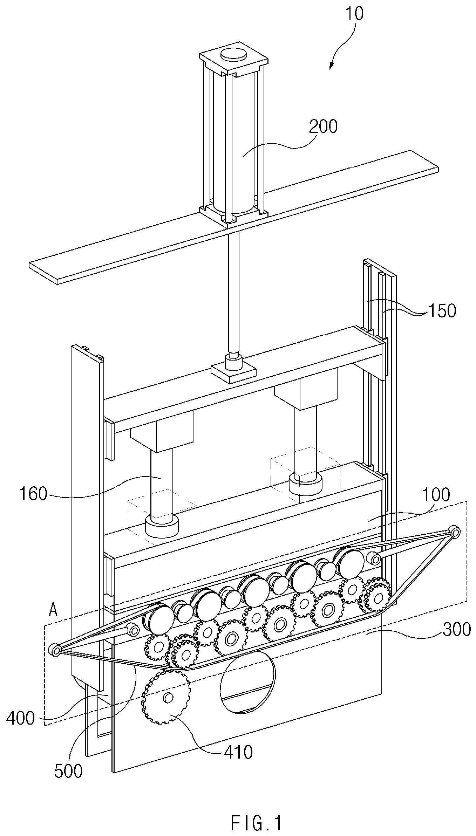

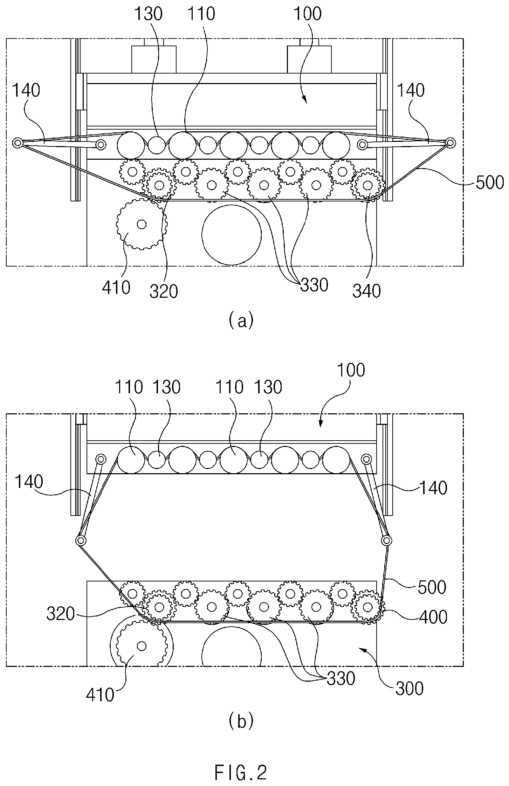

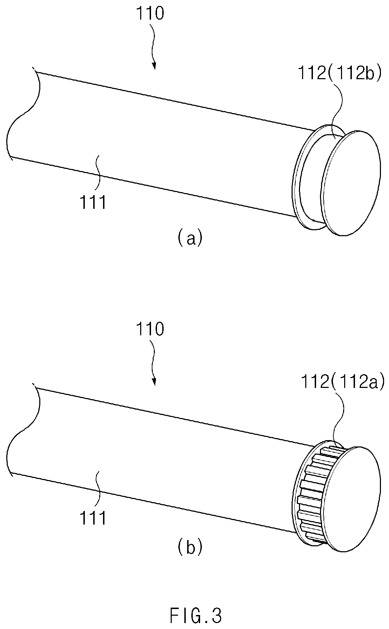

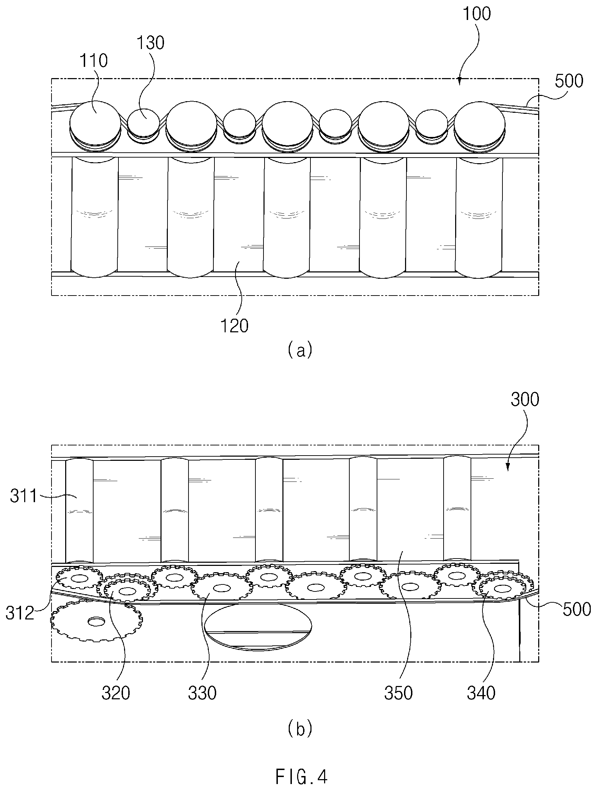

FIG. 1 is a schematic perspective view illustrating a configuration of a secondary battery degassing apparatus according to an embodiment of the present invention.
(a) of FIG. 2 is a front view of a case in which a first rolling press and a second rolling press are driven to be close to each other by a first driving device in the secondary battery degassing apparatus, and (b) of FIG. 2 is a front view of a case in which the first rolling press and the second rolling press are driven to be away from each other according to an embodiment of the present invention.
(a) of FIG. 3 is a perspective view illustrating a configuration of a driving force transmission part of a first pressing roller according to an embodiment of the present invention, and (b) of FIG. 3 is a perspective view illustrating a configuration of a driving force transmission part of a first pressing roller according to another embodiment of the present invention.
(a) of FIG. 4 is a perspective view illustrating a configuration of the first rolling press when viewed from the below, and (b) of FIG. 4 is a perspective view illustrating a configuration of the second rolling press when viewed from the above according an embodiment of the present invention.
FIG. 5 is a perspective view illustrating an example of the second pressing roller according to an embodiment of the present invention.
FIG. 6 is a perspective view illustrating an example of a first transmission gear and a third transmission gear according to an embodiment of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following embodiments.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Secondary battery degassing apparatus (10)

Referring to FIGS. 1 to 4, as one embodiment of the present invention, the present invention may relate to a secondary battery degassing apparatus 10 and may include a first rolling press 100, a first driving device 200, a second rolling press 300, and a second driving device 400.

The secondary battery degassing apparatus 10 may be an apparatus that pushes a gas trapped between a positive electrode, a negative electrode, and a separator of an electrode assembly accommodated in a secondary battery after a primary activation process and a sealing process of the pouch-type secondary battery outward from the electrode assembly to minimize lithium precipitation caused by the trapped gas.

The first rolling press 100 may be configured to press a top surface of the secondary battery from an upper portion of the secondary battery.

The first rolling press 100 may include a first pressing roller 110, a first protection plate 120, an intermediate roller 130, and a tensioner 140.

Referring to FIG. 2, at least one of the first rolling press 100 and the second rolling press 300 may be driven to reciprocate linearly in a vertical direction by the first driving device 200 to adjust a distance according to a type and thickness of the secondary battery.

The first pressing roller 110 may be provided in plurality. The plurality of first pressing rollers 110 may be mounted on one end of the first rolling press 100 at a predetermined interval. More specifically, the first pressing roller 110 may be mounted at a predetermined interval on a lower end of the first rolling press 100.

The first pressing roller 110 may rotate by receiving driving force according to rotational driving of a second driving device 400 and then be in direct contact with the top surface of the secondary battery to press the secondary battery together with the second pressing roller 310. In addition, the first pressing roller 110 may allow the pressed secondary battery to move in a horizontal direction according to a rotation direction. That is, the first pressing roller 110 may be in rolling contact with the top surface of the secondary battery to allow the secondary battery to move in one direction, thereby sequentially pressing the top surface of the secondary battery from one side to the other.

The first pressing roller 110 may include a first pressing part 111 and a driving force transmission part 112.

The first pressing part 111 may be provided in a cylindrical shape and be in contact with the top surface of the secondary battery to directly press the top surface together with the second pressing part 311, which will be described later, and an outer surface of the first pressing part 111 may be smoothly formed to well transmit pressing force to the secondary battery.

The driving force transmission part 112 may be coupled to an end of the first pressing part 111 to receive rotational driving force of the second driving device 400 through elastic force and frictional force of a transmission line 500 so that the first pressing part 111 is driven to rotate.

When described with reference to FIG. 3, the driving force transmission part 112 may have a cylindrical shape that is rotatable about a rotation axis coinciding with a rotation axis of the first pressing part 111, and may also have mounting grooves 112a and 112b along a circumference of an outer surface thereof.

Referring to (a) of FIG. 3, in one embodiment, the mounting groove 112a may be formed in a smooth shape along an outer surface of the driving force transmission part 112. The transmission line 500 may allow the driving force transmission part 112 to rotate through the frictional force between the transmission line 500 and the mounting groove 112a.

Referring to (b) of FIG. 3, in another embodiment, the mounting groove 112b may include a continuous sawtooth shape along the outer circumference of the driving force transmission part 112. The sawtooth shape formed in the mounting groove 112b may be in contact with the transmission line 500 through tension by the tensioner 140 and be coupled to an inner surface of the transmission line 500 by the frictional force. In addition, even if the transmission line 500 is circulated to move according to the rotational drive of the second driving device 400, the transmission line 500 may not be misaligned from the mounting groove 112b due to the frictional force to fully receive transmission force of the transmission line 500 to the driving force transmission part 112.

The first protection plate 120 may be disposed on a lower end of the first rolling press 100 and may be disposed between the plurality of first pressing rollers 110.

When described with reference to (a) of FIG. 4, a plurality of first protection plates 120 having one side that is flat may be disposed on one end of the first rolling press 100, and the first pressing roller 110 may further protrude to one side than the first protection plate 120. More specifically, the first protection plate 120 has a flat bottom surface, and the first pressing roller 110 may protrude further downward than the first protection plate. The first pressing roller 110 may protrude to be exposed through a space between the first protection plate 120 and the adjacent first protection plate 120. Since the first pressing roller 110 further protrudes downward than the first protection plate 120, the secondary battery may be pressed by the first pressing roller 110. The first protection plate 120 may prevent the secondary battery from being introduced into the space between the first pressing roller 110 and the adjacent first pressing roller 110. The first protection plate 120 may guide the secondary battery, which moves in one direction by the first pressing roller 110 and the second pressing roller 310, to move to the first pressing roller 110 and the second pressing roller 310.

The intermediate roller 130 may be a roller for increasing in contact area between the transmission line 500 and the first pressing roller 110 so that the plurality of first pressing rollers 110 are driven to rotate at the same time. The intermediate roller 130 may be provided in plurality and may be disposed between the plurality of first pressing rollers 110 so that the plurality of first pressing rollers 110 are driven to rotate through the transmission line 500. The transmission line 500 may be in repeatedly contact with one of top and bottom surfaces of the plurality of first pressing rollers 110 and the other one of the top and bottom surfaces of the plurality of intermediate rollers 130 to increase in contact area with the first pressing roller 110. As a result, the plurality of first pressing rollers 110 may rotate integrally through a single transmission line 500.

A diameter of the intermediate roller 130 may be less than that of the first pressing roller 110, and a center line of an array of the plurality of intermediate rollers 130 may be disposed to coincide with or be similar to a center line of an array of the plurality of first pressing roller 110.

The intermediate roller 130 may be connected to the driving force transmission part 112 of the first pressing roller 110 through the transmission line 500. The driving force transmission part 112 may receive the rotational driving force of the transmission line 500 through the intermediate roller 130 to rotate, and thus, the first pressing part 111 may rotate in one direction.

The intermediate roller 130 may have a cylindrical shape and may have a transmission groove (not shown) in which the transmission line is mounted along a circumference of the cylindrical shape on an outer surface thereof.

In one embodiment, the transmission groove (not shown) may be provided in a smooth shape along the circumference of the outer surface of the intermediate roller 130. The transmission line 500 may allow the intermediate roller 130 to rotate through frictional force between the transmission line 500 and the transmission groove.

In another embodiment, the transmission groove may include a continuous sawtooth shape along the circumference of the outer surface of the intermediate roller 130. The sawtooth shape formed in the transmission groove may press the transmission line 500 to increase in contact area with the transmission line 500, and thus, even though the transmission line 500 is circulated to move according to the rotational drive of the second driving device 400, the transmission line 500 may not be misaligned with the transmission groove so that the intermediate roller 130 fully receives the transmission force of the transmission line 500.

Referring to FIG. 2, when the tensioner 140 is coupled to the first rolling press 100 and is driven so that the first rolling press 100 and the second rolling press 300 become close to each other, tension of the transmission line 500 may increase.

One end of the tensioner 140 may be hinge-coupled to the first rolling press 100, and the other end may be in contact with the transmission line 500. Therefore, when the first rolling press 100 and the second rolling press 300 are driven close to each other, the other end of the tensioner 140 may move in one direction to press the transmission line 500 in an outward direction, thereby increasing the tension.

A roller may be coupled to the other end of the tensioner 140, and thus, the transmission line 500 may be in contact with the roller. The roller coupled to the other end of the tensioner 140 may allow the tensioner 140 to be in rolling contact with the transmission line 500 so as to move along an inner surface of the transmission line 500.

The tensioner 140 may be provided in plurality and coupled to one side and the other side of the first rolling press 100. The plurality of tensioners 140 may allow the tension to increase by spreading the transmission line 500 to both sides.

At least one of the first rolling press 100 and the second rolling press 300 may further include guide rails 150 on both surfaces thereof.

The guide rails 150 may be disposed on both surfaces of at least one of the first rolling press 100 and the second rolling press 300, and when the first rolling press 100 or the second rolling press 300 is driven vertically by the first driving device 200, the guide rails 150 may guide the vertical movement of the first rolling press 100 or the second rolling press 300.

The first driving device 200 may linearly drive at least one of the first rolling press 100 and the second rolling press 300 in the vertical direction. Preferably, the first driving device 200 may linearly drive the first rolling press 100 in the vertical direction to adjust a distance between the first rolling press 100 and the second rolling press 300. That is, the first driving device 200 may allow the distance between the first rolling press 100 and the second rolling press 300 to vary.

The first driving device 200 is not limited thereto, but may be, for example, an actuator, pneumatic or hydraulic piston-cylinder device.

The first driving device 200 may be disposed on the first rolling press 100, and a plurality of support units 160 may be disposed between the first driving device 200 and the first rolling press 100. The plurality of support units 160 may distribute the pressing force of the first driving device 200 so that the first rolling press 100 presses the secondary battery with an uniform pressure.

The second rolling press 300 may be disposed to face the first rolling press 100. The second rolling press 300 may be disposed below the first rolling press 100 to press the secondary battery together with the first rolling press 100 so that the secondary battery moves in one direction.

The second rolling press 300 may include a second pressing roller 310, a driving gear 410, a first transmission gear 320, a second transmission gear 330, and a third transmission gear 340.

The second pressing roller 310 may be provided in plurality and may be mounted on one end of the second rolling press 300 at a predetermined interval. More specifically, the second pressing roller 310 may be mounted on an upper end of the second rolling press 300 at a predetermined interval.

When the first rolling press 100 and the second rolling press 300 are driven to be close to each other by the first driving device 200, the plurality of first pressing rollers 110 and the plurality of second pressing rollers 310 may be disposed at positions corresponding to each other so that the first pressing roller 110 and the second pressing roller 310 face each other. That is, the plurality of first pressing rollers 110 and the plurality of second pressing rollers 310 may have identical arrangements.

The second pressing roller 310 may rotate according to the rotational driving of the second driving device 400, and the second pressing roller 310 and the first pressing roller 110 may rotate in directions opposite to each other to allow the secondary battery disposed between the first pressing roller 110 and the second pressing roller to move in one direction. In addition, the second pressing roller 310 may allow the secondary battery, which is pressed in the rotation direction, to move in a direction in which the adjacent second pressing roller 310 is disposed. The second pressing roller 310 may be in rolling contact with the bottom surface of the secondary battery to allow the secondary battery to move in one direction, thereby sequentially pressing the bottom surface of the secondary battery from one side to the other. That is, the first pressing roller 110 and the second pressing roller 310 may press the secondary battery together to allow the secondary battery to move in one direction.

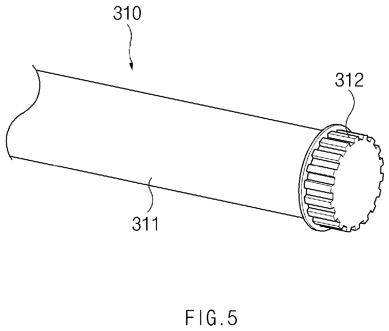

When described with reference to FIG. 5, the second pressing roller 310 may include a second pressing part 311 and an operating gear part 312.

The second pressing part 311 may be provided in a cylindrical shape and be in contact with the bottom surface of the secondary battery at a lower portion of the secondary battery to directly press the bottom surface together with the first pressing part 111, and an outer surface of the second pressing part 311 may be smoothly formed to well transmit pressing force to the secondary battery.

The shortest distance between the first pressing roller 110 and the second pressing roller 310, which is adjusted by the first driving device 200, may be equal to or greater than a thickness of the electrode assembly provided in the secondary battery. More specifically, a spaced distance between an upper end of the second pressing part 311 of the second pressing roller 310 and a lower end of the first pressing part 111 of the first pressing roller 110 may be equal to or greater than the thickness of the electrode assembly provided in the secondary battery, and preferably may be equal to similar to the thickness of the electrode assembly. If the spaced distance between the upper end of the second pressing part 311 and the lower end of the first pressing part 111 is less than the thickness of the electrode assembly, the electrode assembly may be damaged by a pressure applied to the electrode assembly, and thus, the spaced distance has to be equal to or greater than the thickness.

The secondary battery degassing apparatus 10 of the present invention may be used to remove the fine gas generated or captured between the positive electrode, the negative electrode, and the separator of the electrode assembly by pushing the fine gas outward from the electrode assembly. Therefore, the spaced distance between the upper end of the second pressing part 311 and the lower end of the first pressing part 111 may be equal or similar to the thickness of the electrode assembly because the first pressing part 111 and the second pressing part 311 are in close contact with the electrode assembly to push the gas generated in the electrode assembly outward from the electrode assembly without damaging the electrode assembly.

The operating gear part 312 may have a cylindrical shape to be coupled to one end of the second pressing part 311 so as to be rotatable about a rotation axis that coincides with a rotation axis of the second pressing part 311, and a continuous tooth-shaped gear may be provided along an outer surface of the operating gear part 312.

The operating gear part 312 may receive the rotational driving force of the second driving device 400 to allow the second pressing part 311 to rotate. The operating gear part 312 and the second pressing part 311 may rotate at the same angular speed.

The first transmission gear 320 may receive the rotational driving force from the driving gear 410 of the second driving device 400 to allow the second pressing roller 310 to rotate.

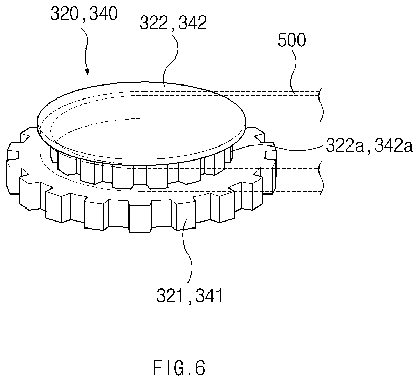

Referring to FIG. 6, teeth engaged with the operating gear part 312 of the second pressing roller 310 may be provided on the outer surface of the first transmission gear 320. The first transmission gear 320 may be disposed between the pair of second pressing rollers 310 that are adjacent to each other. The first transmission gear 320 may be engaged with the pair of second pressing rollers 310 adjacent to each other, and when the first transmission gear 320 rotates in one direction, the pair of second pressing rollers 310 engaged with the first transmission gear 320 may rotate in the other direction. More specifically, the first transmission gear 320 may be engaged with the pair of adjacent operating gear parts 312.

The first transmission gear 320 may be disposed below the second pressing roller 310.

The first transmission gear 320 may be engaged with and gear-coupled to the teeth provided on the driving gear 410 and thus be driven to rotate. The first transmission gear 320 may be disposed above the driving gear 410 and may be disposed between the driving gear 410 and the second pressing roller 310.

The first transmission gear 320 may include a first gear part 321 and a first pulley part 322.

As described above, the first gear part 321 may have teeth provided on an outer surface thereof and may be driven to rotate while engaged with the driving gear 410 and the pair of adjacent operating gear parts 312.

The first pulley part 322 may protrude in a cylindrical shape on one surface of the first gear part 321 in the direction of the rotation axis of the first gear part 321 and may be in contact with the transmission line 500 to be described later. A first guide groove 322a may be defined along the outer surface of the first pulley part 322 to guide the transmission line 500. The transmission line 500 may be circulated to move by frictional force with the first pulley part 322 as the first pulley part 322 is driven to rotate.

The first pulley part 322 may be provided to be integrated with the first gear part 321 and may rotate at the same angular speed as the first gear part 321.

The second transmission gear 330 may be provided in a gear shape and may be provided in plurality. The plurality of second transmission gears 330 may be sequentially disposed at predetermined intervals with respect to the first transmission gear 320 and may be disposed between the pair of adjacent second pressing rollers 310.

The second transmission gear 330 may be disposed at the same height as the first transmission gear 320 and the second rolling press 300 and may be disposed below the second pressing roller.

The teeth provided on the outer surface of the second transmission gear 330 may be engaged with the teeth of the operating gear part 312 of the pair of adjacent second pressing rollers 310, which are adjacent to the second transmission gear 330, and thus may be gear-coupled to each other to rotate. The rotation direction of the second transmission gear 330 and the rotation direction of the second pressing roller 310 may rotate in opposite directions.

The third transmission gear 340 may be disposed at the same height as the first transmission gear 320 and the second transmission gear 330 in the second rolling press 300 and may be disposed below the second pressing roller.

The third transmission gear 340 may be disposed adjacent to the second transmission gear 330 that is furthest from the first transmission gear 320 and may be in contact with the second pressing roller 310.

When described with reference to FIG. 6, the third transmission gear 340 may include a second gear part 341 and a second pulley part 342.

The second gear part 341 may be gear-coupled to the second transmission gear 330. The second gear part 341 may be provided in a gear shape and have teeth that are engaged with the teeth of the second transmission gear 330 on an outer surface thereof.

The second pulley part 342 may be provided to protrude in the direction of the rotation axis on one surface of the second gear part 341. The second pulley part 342 may be in contact with the transmission line 500.

The third transmission gear 340 may receive the rotational driving force of the second driving device 400 through the second pressing part 311 and simultaneously may be connected to the first pulley part 322 and the operating gear part 312 through the transmission line 500.

A second guide groove 342a may be defined along a circumference of the second pulley part 342 to guide the transmission line 500. A continuous sawtooth shape may be provided in the second guide groove 342a to improve friction force with the transmission line 500.

The second protection plate 350 may be disposed on an upper end of the second rolling press 300 and may be disposed between the plurality of second pressing rollers 310.

When described with reference to (b) of FIG. 4, a plurality of second protection plates 350 having one side that is flat may be disposed on one end of the second rolling press 300, and the second pressing roller 310 may further protrude to one side than the second protection plate. More specifically, the second protection plate 350 may have a flat top surface, and the second pressing roller 310 may protrude further upward than the second protection plate 350. The second pressing roller 310 may protrude to be exposed through a space between the second protection plate 350 and the adjacent second protection plate 350. Since the second pressing roller 310 protrudes upward from the second protection plate 350, the secondary battery may be pressed by the second pressing roller 310, and the second protection plate 350 may prevent the secondary battery from being introduced into a space between the second pressing roller 310 and the adjacent second pressing roller 310. The second protection plate 350 may guide the secondary battery, which moves in one direction by the first pressing roller 110 and the second pressing roller 310, to move to the first pressing roller 110 and the second pressing roller 310.

The second driving device 400 may be a rotation driving device, but is not limited thereto, and may be, for example, a motor.

The second driving device 400 may be driven to allow the driving gear 410 coupled to a rotation shaft of the second driving device 400 to rotate. The rotational driving force of the second driving device 400 may be transmitted to the first transmission gear 320, the second pressing roller 310, the second transmission gear 330, and the third transmission gear 340, which are directly or indirectly connected to the driving gear 410.

The second driving device 400 may constantly maintain the angular speed of the rotation driving or decrease or increase in angular speed according to the user's control.

The second driving device 400 may be coupled to the second rolling press 300, and at least a portion of the second driving device 400 may be disposed inside the second rolling press 300.

The driving gear 410 may be provided in a gear shape and may be coupled to the rotation shaft of the second driving device 400. The driving gear 410 may be disposed on one surface of the second rolling press 300 and be gear-coupled to the first gear part 321 of the first transmission gear 320 to rotate in direct engagement, and the second driving device 400 may be transmitted to the first gear part 321.

A diameter of the driving gear 410 may be longer than that of the first transmission gear 320.

The transmission line 500 may transmit the rotational driving force of the second driving device 400 to the first pressing roller 110 and the intermediate roller 130 to allow the first pressing roller 110 and the intermediate roller 130 to rotate.

The transmission line 500 may be flexibly deformed and made of a material that is capable of being elastically restored. The transmission line 500 is not limited thereto, but may be formed of, for example, a rubber material.

The transmission line 500 may be in contact with the first pulley part 322, the driving force transmission part 112, the intermediate roller 130, and the second pulley part 342, and as the first pulley part 322 rotates, the transmission line 500 may be circulated to move along the first pulley part 322, the driving force transmission part 112, the intermediate roller 130, and the second pulley part 342. The driving force transmission part 112 and the intermediate roller 130 may receive the rotational driving force according to the circular movement of the transmission line 500. That is, according to the rotational drive of the second driving device 400, the driving gear 410, the first transmission gear 320, the second transmission gear 330, the third transmission gear 340, and the second pressing roller 310 may be driven to rotate, as well as the first pressing roller 110 and the intermediate roller 130 connected through the transmission line 500 may also be driven to rotate.

When the transmission line 500 is driven by the first driving device 200 so that the first rolling press 100 and the second rolling press 300 are away from each other, tension may be generated by force of the first rolling press 100 and the second rolling press, which pulls the transmission line 500. When the first rolling press 100 and the second rolling press 300 are driven to be close to each other, tension may be generated by the force of the plurality of tensioners 140, which pushes the transmission line 500 in both directions.

The transmission line 500 may be in close contact with the first pulley part 322, the driving force transmission part 112, the intermediate roller 130, and the second pulley part 342, which are in contact with the transmission line 500, through the tension generated in the transmission line 500 to increase in frictional force on a contact surface between the above-described components and the transmission line 500, and thus, the first pulley part 322, the driving force transmission part 112, the intermediate roller 130, and the second pulley part 342 may rotate integrally.

The transmission line 500 may be disposed in a zigzag shape to be in repeatedly contact with the top surface of the driving force transmission part 112 of the first pressing roller 110 and the bottom surface of the intermediate roller 130, and thus, the contact area between the driving force transmission part 112 and the transmission line may increase to increase in frictional force between the transmission line 500 and the driving force transmission part 112, and thus, the plurality of sequentially arranged driving force transmission parts 112 may integrally rotate at the same angular speed.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

10: Secondary battery degassing apparatus
100: First rolling press
110: First pressing roller
111: First pressing part
112: Driving force transmission part
112a, 112b : Mounting groove
120: First protection plate
130: Intermediate roller
140 : Tensioner
150: Guide rail
160: Support unit
200: First driving device
300: Second rolling press
310: Second pressing roller
311: Second pressing part
312: Operating gear part
320: First transmission gear
321: First gear part
322: First pulley part
322a: First guide groove
330: Second transmission gear
340: Third transmission gear
341: Second gear part
342: Second pulley part
342a: Second guide groove
350: Second protection plate
400: Second driving device
410: Driving gear
500: Transmission line

## Claims

1. A secondary battery degassing apparatus comprising:
a first rolling press on which a plurality of first pressing rollers are mounted at a predetermined interval;
a second rolling press which is disposed to face the first rolling press and on which a plurality of second pressing rollers are mounted at a predetermined interval;
a first driving device configured to allow a distance between the first rolling press and the second rolling press to vary; and
a second driving device driven to allow the first pressing roller and the second pressing roller to rotate,
wherein the first pressing roller and the second pressing roller is in rolling contact with the secondary battery disposed between the first rolling press and the second rolling press to press the secondary battery.

2. The secondary battery degassing apparatus of claim 1, wherein the first pressing roller and the second pressing roller are disposed at positions corresponding to each other.

3. The secondary battery degassing apparatus of claim 2, wherein the shortest distance between the first pressing roller and the second pressing roller is equal to greater than a thickness of an electrode assembly provided in the secondary battery.

4. The secondary battery degassing apparatus of claim 1, wherein a plurality of first protection plates, each of which has flat one surface, are disposed on one end of the first rolling press,
each of the first protection plates is disposed between the plurality of first pressing rollers, and
each of the first pressing rollers further protrudes to one side than the first protection plate.

5. The secondary battery degassing apparatus of claim 1, wherein the second rolling press further comprises:
a driving gear coupled to the second driving device so as to be driven to rotate; and
a first transmission gear disposed between the driving gear and the second pressing roller to transmit rotational driving of the driving gear to the second pressing roller.

6. The secondary battery degassing apparatus of claim 5, wherein teeth engaged with each other are provided on the second pressing roller and the first transmission gear.

7. The secondary battery degassing apparatus of claim 5, wherein the first transmission gear is disposed between the pair of second pressing rollers adjacent to each other.

8. The secondary battery degassing apparatus of claim 5, wherein the second rolling press further comprises a plurality of second transmission gears that are sequentially disposed at a predetermined interval with respect to the first transmission gear and are respectively disposed between the pair of second pressing rollers that are adjacent to each other.

9. The secondary battery degassing apparatus of claim 8, further comprising a transmission line configured to transmit rotational power of the first transmission gear to the first pressing roller.

10. The secondary battery degassing apparatus of claim 9, wherein the first transmission gear comprises:
a first gear part gear-coupled to the driving gear; and
a first pulley part protruding in an axis direction from the gear part and in contact with the transmission line.

11. The secondary battery degassing apparatus of claim 10, wherein a first guide groove is defined along a circumference of the first pulley part so that the transmission line is guided.

12. The secondary battery degassing apparatus of claim 10, further comprising a tensioner that increases in tension of the transmission line when the first rolling press and the second rolling press are driven to be close to each other by the first driving device.

13. The secondary battery degassing apparatus of claim 12, wherein the tensioner has one end that is hinge-coupled to the first rolling press and the other that is in contact with the transmission line, and
when the first rolling press and the second rolling press are driven to be close to each other by the first driving device, the other end of the tensioner is configured to press the transmission line outward.

14. The secondary battery degassing apparatus of claim 10, wherein the first rolling press comprises a plurality of intermediate rollers, each of which is disposed between the plurality of first pressing rollers, and
the transmission line is in repeatedly contact with top surfaces of the plurality of first pressing rollers and bottom surfaces of the plurality of intermediate rollers so that the first pressing roller and the intermediate roller rotate.

15. The secondary battery degassing apparatus of claim 10, wherein the second roller press comprises a third transmission gear that is disposed to be adjacent to the second transmission gear, which is farthest from the first transmission gear, and is in contact with the second pressing roller.

16. The secondary battery degassing apparatus of claim 15, wherein the transmission line is configured to connect the third transmission gear to the first pressing roller.

17. The secondary battery degassing apparatus of claim 16, wherein the third transmission gear comprises:
a second gear part gear-coupled to the second transmission gear; and
a second pulley part protruding in an axis direction from the second gear part and in contact with the transmission line.

18. The secondary battery degassing apparatus of claim 17, wherein a second guide groove is defined along a circumference of the second pulley part so that the transmission line is guided.

19. The secondary battery degassing apparatus of claim 1, further comprising a guide rail configured to guide vertical driving on both surfaces of at least one of the first rolling press and the second rolling press.

20. The secondary battery degassing apparatus of claim 1, wherein a plurality of second protection plates, each of which has flat one surface, are disposed on one end of the second rolling press,
each of the second protection plates is disposed between the plurality of second pressing rollers, and
each of the second pressing rollers further protrudes to one side than the second protection plate.
